# EUROPEAN PATENT SPECIFICATION

(11) **EP 1 546 490 B1**
(45) Date of publication and mention of the grant of the patent: **13.10.2010**
(21) Application number: 03748807.9
(22) Date of filing: 01.09.2003
(51) Int. Cl.: E04H 5/08, A01K 1/015

(54) **FARMING STRUCTURE**
ZUCHTKONSTRUKTION
STRUCTURE AGRICOLE

(30) Priority: 03.09.2002 NZ 52115002
(43) Date of publication of application: 29.06.2005
(73) Proprietor: Herd Homes Limited, Whangarei 0121 (NZ)
(72) Inventor: POW, Thomas, George, Whangarei 0121 (NZ); POW, Kathleen, Ann, Whangarei 0121 (NZ)
(74) Representative: Duffy, Assumpta Dympna
(86) International application number: PCT/NZ2003/000195
(87) International publication number: WO 2004/022883

(56) References cited:
- WO-A1-93/19588
- DE-U1- 20 007 702
- GB-A- 2 136 472
- GB-A- 2 248 076
- US-A- 5 911 195
- US-A1- 3 905 334

## Description

### TECHNICAL FIELD

This invention relates to farming structures and in particular, though not solely, to sheltering or standing structures for animals and waste matter handling systems therefore. The invention is applicable and/or adapted to suit the farming of any livestock such as cattle, sheep, deer, goats, pigs, ostriches, and the like.

### BACKGROUND ART

One important aspect of dairy farming is the management of effluent disposal.

Many regions/countries have strict rules or guidelines regarding effluent disposal from, for example, a farm or cowshed. For example, many regions/countries prohibit the discharge or disposal of untreated effluent into waterways. This is to prevent waterways, and waterbodies (such as lakes) into which they run becoming polluted with untreated effluent, nitrogen (from either the effluent or fertiliser applied to paddocks), or other undesirables or waste products resultant from farming.

One common method of effluent disposal or treatment involves the use of oxidation ponds. Oxidation ponds usually involve water or other runoff containing effluent first passing through an anaerobic pond (generally relatively deep), followed by a shallower aerobic pond before finally being released into the environment, such as a waterway. Bacterial breakdown in the oxidation pond(s) generally removes or neutralises the effluent from the water.

Advantages of oxidation ponds include the fact that they have a low labour requirement and low maintenance cost, and that there is little chance for human error to cause problems. Disadvantages include the fact that useful farm nutrients may be lost through the pond system, and a resource consent may be required in many regions/countries from the local council or planning authority. Furthermore, with a trend of increasing herd sizes on dairy farms, existing ponds may not be big enough to cope (especially as ponds also collect rain water). Furthermore, leakage through the bottom of the ponds can be a problem and/or ponds need to be lined with clay or plastic if soils are free draining. Other disadvantages include the fact that the water being discharged in some cases may still fail to meet pollution limit, and the cost of constructing an oxidation pond(s) can be prohibitive.

Another method of effluent disposal involves the use of effluent spreaders which can be used to spread effluent from a holding pond or tank onto pasture. Similarly, an irrigation system may be utilised to spread effluent back onto pasture. Advantages of these methods include the fact that the effluent may have higher fertiliser value and that it also decreases the reliance on ponds or ditches. Disadvantages include the cost of hiring or utilising an effluent spreader such as a slurry wagon or the cost of installing or maintaining an irrigation system. Furthermore, by spreading effluent on wet farmland, there may be a greater risk of runoff of the untreated effluent into waterways. Moreover, during a wet season or time, the spreading of (wet) effluent onto already wet farmlands may lead to pugging and/or compaction damage to pasture.

Unrelated to effluent disposal, pugging and compaction damage can occur when the soil is so soft and/or wet that the weight of grazing animals or use of farm vehicles and machinery, cannot be supported by the soil's surface. This can result in poor drainage, namely where the soil will remain soft and wet, and hence the animals will cause ongoing damage at subsequent grazings. Pugging and compaction damage can also result in reduced pasture utilisation (by say 20% to 40%) as well as a reduction in future pasture yield, depending upon the soil type. Pugging also allows weeds and poor species of grasses to become established. Moreover, pugging and compaction damage requires more tractor passes for seed bed preparation and sowing and greater fertiliser and topsoil requirements. However, it may not always be possible to add the necessary increased fertiliser requirement due to some region's/country's regulations regarding runoff of nitrogen into the waterways.

In order to address the problem of effluent runoff, and/or pugging and/or compaction damage, stand-off pads are often used. Stand-off pads are, generally purpose-built, drained, loafing or standing spaces where stock can be held for long periods when it is not suitable to have them on pasture, for example during a wet season, inclement weather, or when it is otherwise undesirable to have cattle or other livestock on pasture (for example, when it is desirable to protect or shield the livestock from heat or sunlight).

Presently available stand-off pads are usually constructed of wood/wood chips, metal/lime, or concrete. One disadvantage associated with presently available stand-off pads is in relation to draining. That is, many pads often have poor drainage generally and/or simply allow the effluent to drain into the existing effluent disposal systems such as oxidation ponds, or worse, directly into waterways.

With stand-alone pads that do not allow for effluent to be drained or flushed away, the removal of effluent may be difficult, time consuming, and/or require regular attention.

Furthermore, it is found that there are usually problems associated with standing of livestock such as cows on presently available concrete pads (predominantly lameness) and wood chip pads (predominantly mastitis). The effectiveness of wood chip pads is generally found to be dependent upon good management and regular maintenance, involving regularly stripping the old surface and replacing it with new wood chips. This can be both time and cost intensive.

It would be desirable to provide a farming structure such as a stand-off pad with minimal or no effluent discharge or cleaning requirement, and which provided livestock with a safe and healthy environment.

US-A-5911195 discloses a farming structure according to the preamble of claim 1.

All references, including any patents or patent applications cited in this specification are hereby incorporated by reference. No admission is made that any reference constitutes prior art. The discussion of the references states what their authors assert, and the applicants reserve the right to challenge the accuracy and pertinency of the cited documents. It will be clearly understood that, although a number of prior art publications are referred to herein, this reference does not constitute an admission that any of these documents form part of the common general knowledge in the art, in New Zealand or in any other country.

It is acknowledged that the term 'comprise' may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in relation to one or more steps in a method or process.

It is therefore an object of the present invention to provide a farming structure such as a stand-off pad which will go at least some way towards addressing the foregoing problems or which will at least provide the industry with a useful choice.

Further aspects and advantages of the present invention will become apparent from the ensuing description which is given by way of example only.

### DISCLOSURE OF INVENTION

Accordingly, in a first aspect the invention consists in a stand-off pad adapted to support waste matter producing animals, said pad including:
(a) a floor, including drainage means allowing said waste matter to pass therethrough,
(b) a basement area below said floor for collecting said waste matter, and
(c) support means for supporting said floor above said basement area.

Preferably, said basement area prevents any waste matter from being discharged into an effluent disposal means and/or waterways by collecting and storing all waste matter passing through said drainage means.

Preferably, said drainage means is in the form of plurality of apertures or slots formed in the floor.

Preferably, said floor is in the form of a plurality of modular components.

Preferably, said modular components are in the form of substantially rectangular slabs.

Preferably, said modular components are in the form of concrete slabs.

Preferably, said concrete slabs are formed from pre-stressed concrete.

Preferably, said modular components are provided with a plurality of spaced apart slats with the spaces between slats providing said drainage means.

Preferably, the length of each modular component is between about 2m to about 5m.

Preferably, the width of each modular component is between about 0.5m to about 4m.

Preferably, the width of the spaces between adjacent slats is between about 1cm to about 10cm.

Preferably, the width of the slats is between about 10cm to about 30cm.

Preferably, the standoff pad is provided with a cover over at least part of said floor.

Preferably, said cover is in the form of a roof supported by side walls or posts/poles.

Preferably, the roof is comprised primarily, or in whole, of a waterproof material(s).

Preferably, the roof is comprised primarily, or in whole, of plastics film.

Preferably, said basement area is provided with a bedding mix.

Preferably, said bedding mix includes wood chips and/or topsoil and/or straw/hay and/or bark and/or sand.

Preferably, said modular components are readily removable from the support means as or when required or desired.

Preferably, said basement area is accessible by standard farm vehicles, once the modular components have been removed.

Preferably, said stand-off pad is provided with at least one feed stall and/or at least one drinking water trough.

In a further aspect, the invention consists in a farming structure including a stand-off pad according to the first aspect and a cover supported above said stand-off pad.

According to yet a further aspect of the invention there is provided a fertiliser including said waste matter collected from the basement area of the stand-off pad according to the first or second aspect.

The terms "waste matter" is understood to include cattle or livestock effluent such as faeces and urine, as well as other waste such as food waste and the like.

Any suitable drainage means may be utilised as required or as desired, or as dictated by the type of cattle or livestock which are to utilise the stand-off pad. For example, the drainage means may be in the form of a plurality of apertures or slots formed in the floor. The drainage means may preferably be of a sufficient size whereby they do not provide a hindrance or safety risk to the cattle or livestock utilising the stand-off pad. Accordingly, the apertures or slots are dimensional to suit the type of livestock (especially feet or hoof size) to be supported by the stand-off pad.

The floor may be made of any suitable material and/or components as required or as desired, or as dictated by the type of cattle or stock to utilise the stand-off pad. For example, the stand-off pad may be made of wood, a combination of wood and wood chips, concrete, heavy duty plastics materials and the like. It is envisaged that concrete may be a particularly suitable material as it is generally more hygienic than wood and is easier to clean. It is also found that the use of a concrete material minimises the risk of mastitis in cattle. It is envisaged that pre-stressed steel reinforced concrete may be a particularly suitable material.

Preferably, the floor may be formed of a plurality of modular floor components arranged side by side to thus form the floor. There may be provided slight gaps between the components to provide additional drainage means, although preferably the components may be arranged side by side, with no gaps therebetween. The modular floor components may be of any suitable size, shape or configuration as required or as desired, or as dictated by the type of cattle or stock to utilise the stand-off pad.

Preferably, the modular floor components may be in the form of substantially rectangular slabs. Furthermore, the modular floor components may be in the form of concrete slabs, and pre-stressed concrete may be particularly suitable (that is, the same type of concrete as commonly used in telegraph poles or power poles). The modular floor components may preferably be provided with a number of slats formed therein, with gaps or slots formed therebetween to provide drainage means. Preferably, the slats or slots run lengthwise along the modular floor components.

In a preferred embodiment, the length of each modular floor component may be between about 2m and about 4m with a width of between about 0.5m to about 1m. However, it is to be understood and appreciated that lengths and widths outside of these ranges are also considered to be part of the present invention. Furthermore, in a preferred embodiment the width of the gaps between slats may be between about 1cm to about 5m, and the distance between the gaps may be between about 10cm to about 30cm. Again however, widths and distances outside of these ranges are also understood to comprise part of the present invention.

The support means for supporting the floor above the basement area may comprise a support wall of appropriate strength and made of an appropriate material such as concrete. If the floor is comprised of modular floor components, substantially as described above, it is envisaged that one end of a modular floor component may rest on a support wall, with the other end of the modular component resting on another support wall. There may be any number of support walls utilised in constructing any one stand-off pad.

The stand-off pad may be used as a cow collection yard or drafting yard at a cow milking shed. The stand-off pad could also be used a cattle yard for draughting or loading cattle or deer or other livestock onto a truck or the like. Accordingly, the stand-off pad according to the present invention could form any existing farming structure in which livestock are required to be held or grouped or sheltered for a period of time.

The stand-off pad may be provided with a cover in order to provide shelter to the cattle or stock utilising the stand-off pad. The cover may allow for the stand-off pad to remain relatively dry and/or free from exposure to the elements such as wind. The cover may be in the form of a roof supported by side walls. The side walls may be fully enclosed, or may be provided with openings to allow for ventilation and the like.

The roof may be formed from any suitable roofing material, although a waterproof material would be particularly suitable. For example, a plastics film would be a suitable roofing material given that it is relatively easy and quick and cost-effective to construct a roof of this nature.

The plastics film may be clear to allow light to pass therethrough but preferably it would block at least some ultra-violet light. Other suitable roofing materials may be corrugated iron, clear corrugated plastic, reinforced fabric and the like. The roof may extend over the entire area of the floor or only over a portion of the floor area.

The basement area may have a concrete or other similar solid, liquid retaining floor. There may be more than one basement area situated below the floor, namely there may be separate basement areas formed between each support means.

The basement area or areas may be provided with a bedding mix to assist in absorbing waste material and/or to neutralise the waste material and/or to transform the waste material into fertiliser. Further additives to the bedding mix may include material designed to neutralise smell and/or any acidic or undesirable properties associated with the waste material. Examples of suitable components for the bedding mix include wood chips and/or topsoil, and/or lime. The basement area or bedding mix may alternatively or additionally be provided with worms or other organisms to assist in the aeration and/or composting and/or dehydration of the waste material. It is considered that topsoil is an advantageous bedding material because of the useful bacteria therein which help to breakdown and/or oxidise matter within the waste material.

It has been found that the present invention produces in the basement area an environment, at least during the summer months, with sufficient warmth and air flow (for example through the drainage means or through gaps between modular floor components) encourage evaporation of moisture from the stored waste material. It has also been found that upon contact with the air, a film or skin is formed over the liquid waste material within the basement are in much the same way as a skin forms quickly over a "cow pat" and that this skin or film serves to block odours and/or harmful gases emanating from the waste material from being released into the surroundings of the stand-off pad. The skin or film is believed to be a protein which forms upon contact with oxygen of components within the waste matter and while blocking gases and odours still allows the evaporation of moisture therethrough.

Whilst in-use by waste matter producing livestock it has been found that the temperature of the air within the basement area of the stand-off pad according to the present invention, at least during the cooler part of the year, may not be enable sufficient evaporation in the basement area to actively reduce the volume of liquid in the waste matter but as no unpleasant odours are produced this does not present a problem. As the temperature increases during the warmer summer months, evaporation from the waste matter within the basement area has been found to produce a net reduction in the volume of liquid in the waste matter (that is, the amount of liquid reduces eventhough the stand-off pad is in use).

The modular flooring components may be readily or easily removable from the support means. For example, if the modular flooring components are in the form of concrete slabs, then they may simply rest atop the support means, with no other retention means being required or desired. They may then be readily removed by the use of a tractor or other farm vehicle fitted with lifting forks or the like.

In such an embodiment it may be seen that the basement area may be readily accessible by removing the modular components as described above. This accessibility allows for the easy and ready cleaning of the basement area as or when required or desired. For example, an appropriate farm vehicle fitted with a scraper or bucket may clean out each basement area as appropriate. Accordingly, the distance between support means is preferably sufficient to enable farm vehicles such as tractors to pass therethrough.

The prior art does include stand-off pads comprised of a concrete material, however the concrete material used was not pre-stressed concrete (which is relatively light but strong). As such, the length of the prior art concrete slabs could not extend past a width which would otherwise have enabled normal farm vehicles such as tractors and the like to access the area underneath, when the slabs had been removed. The present invention preferably utilises pre-stressed concrete or equivalent materials which are not only self-supporting over the required span length but are capable of also supporting additional livestock loads and is therefore able to produce slabs of such an appropriate width. That is, of a width which not only withstands the weight of cattle or stock above, but also of a width which enables standard farm vehicles such as tractors to remove the slabs as well as to access the basement area, once the slabs have been removed.

The basement area may provide for no run-off of waste matter, that is all waste matter is gathered by and retained or stored by within the basement area. The waste matter stored within the basement area then decomposes and/or dehydrates so that much of the liquid in the waste matter evaporates over time. Accordingly, the invention provides the advantage of ensuring that there is no run-off of waste matter to waterways or effluent disposal means such as oxidation ponds, thus minimising the amount of material to be ultimately treated and discharged into waterways. Furthermore, all of the nitrogen compounds, commonly found in cattle or stock faeces and urine is prevented from ultimately running off into either effluent disposal means or waterways. By reducing the amount of nitrogen that is allowed to ultimately flow into waterways, a farmer may therefore be able or permitted to use more nitrogen containing fertilisers on pastures. This is of significant importance as many regions/countries currently restrict the amount of nitrogen run-off from waterways, much of which is due to cattle or stock faeces and urine. Hence, by being able to apply more nitrogen containing fertilisers to pasture during periods when cattle or stock are housed on or within the stand-off pad, pasture growth and productivity may therefore be greatly enhanced.

The stand-off pad may be provided with feed stalls, into which may be placed appropriate cattle or stock feed such as hay or silage or food pellets. The feed stalls may be of any size, shape or configuration as required or as desired, or as dictated by the type of cattle or stock to be housed on the stand-off pad. Preferably, the feed stalls may be housed around the periphery or along the side walls of the stand-off pad.

The stand-off paid may also be provided with drinking water, readily accessible by the cattle or stock. Any suitable means for storing the water may be utilised, for example a trough, or like means. Preferably, the drinking water may be changed regularly (for example 1 to 5 times per week) so that the cattle or stock have continuous access to fresh drinking water.

The stand-off pad may be provided with containment means to prevent cattle or livestock from wandering away from or out of the stand-off pad. Alternatively, the stand-off pad may be provided with an opening or exit to allow cattle or livestock to enter and/or exit the stand-off pad as required or as desired. However, it is found that most cattle or stock prefer to remain on the stand-off pad rather than an alternative exposed outdoors area that may be situated nearby. Containment means may be provided by fences, walls, gates and the like. For example, the stand-off pad may be substantially rectangular with the two parallel side walls selectively closed off at either end by gates.

Furthermore, a major problem associated with presently available stand-off pads made from concrete slabs is that the relatively hard or abrasive nature of the concrete slabs often results in lameness in cattle or livestock. It is found that the use of pre-stressed concrete, which is lighter and softer than concrete used previously, results in minimal or no lameness in cattle or livestock. This is of significant advantage over presently available concrete stand-off pads.

Furthermore, it is found that the use of pre-stressed concrete provides a more satisfactory and comfortable surface upon which cattle or other livestock can sit. Moreover, it is found that the use of pre-stressed concrete greatly reduces or negates instances of foot troubles such as lameness and foot rot. It is also found that because cattle or other livestock find the use of pre-stressed concrete as a material for a stand-off pad to be more desirable than previous concrete pads or wood chip pads, improved mating rates occur as a result, and furthermore a better surface is provided for safe and effective calving.

Moreover, it is found that in the embodiment where the stand-off pad is covered by a substantially waterproof cover, the concrete comprising the floor of the stand-off pad remains relatively dry. Hence, this allows for a small deposit or film of compressed dry manure to form on the concrete. This may serve to act as an insulator and/or softener between the hoof or foot of an animal and the concrete pad while still allowing liquid waste matter to pass therethrough and be collected in the basement area. The beneficial properties of this compressed dry manure or small deposit or film layer on the floor of the stand-off pad may be enhanced by any light allowed to pass through the roofing material.

It is found that the basement area, including the waste matter and/or any bedding mixes, need only be cleaned approximately once per year, and may in fact need only cleaning for longer periods, for example once every 1 to 5 years. Hence, the stand-off pad is relatively low maintenance, as well as being relatively easy and quick to clean.

The decomposed/decomposing/dehydrated waste material and/or bedding mix collected or cleaned from the basement area may be useful as a fertiliser which may be spread back onto pasture or bagged and sold at garden centres or the like. Alternatively, if it is considered desirable not to spread the resultant waste material and/or bedding mix over pasture, it may simply be disposed of, for example by trucking to an appropriate tip, or by being buried and the like.

In a further embodiment of the present invention, a farming structure such as a dairy milking shed may incorporate the above described stand-off pad construction. That is, the dairy milking shed and more particularly the yard of the shed may be formed with a floor having drainage means, a basement area below the floor for collecting the waste matter and support means supporting the floor above the basement area. Conventionally, after milking, farmers are required to hose waste material from the cow shed and in particular the yard into a drainage system whereas this embodiment would avoid the need to hose down the yard.

In a milking shed yard, waste matter is not evenly distributed over the entire yard (because as cows are gradually herded in the yard towards the milking shed most of the waste matter is deposited in the area before the shed). Accordingly, in this embodiment it may be necessary to encourage the waste matter within the basement area to spread out. This may be accomplished by for example forming the floor of the basement area in a number of steps with the highest step being beneath the entrance to the milking shed. For example, the steps may be evenly spaced with a drop of between 50mm to 200mm, or more preferably 100mm between adjacent steps. In order to avoid all waste matter flowing down to the lowest step, each step may be slightly sloped backwards so that it is able to hold a volume of waste matter before the excess overflows to the next step. Alternatively, the front edge of each step may be provided with a ledge or a lip so that overflow only occurs once waste matter has accumulated to a predetermined level on the step.

The above described movement of waste may be enhanced or improved by a mechanical system to help spread the waste matter out over the plurality of steps. For example, a vibrator or moving spreader may be provided in conjunction with the steps.

In this alternative embodiment, access to the basement area may be provided from "side-on" so that a farm vehicle such as a tractor may be driven along each step in turn to collect decomposed/decomposing/dehydrated waste matter on occasion.

### BRIEF DESCRIPTION OF DRAWINGS

Further aspects of the present invention will become apparent from the following description which is given by way of example only and with reference to the accompanying drawings in which:
- Figure 1: is a plan view of one possible embodiment of a stand-off pad according to the present invention, without a cover;
- Figure 2: is an end elevation of the stand-off pad shown in Figure 1, with a cover;
- Figure 3(a): is a plan view of a modular flooring component, forming at least part of the floor of the stand-off pad shown in Figures 1 and 2; and
- Figure 3(b): is a side elevation of the modular flooring component of the stand-off pad shown in Figure 3(a).

### BEST MODES FOR CARRYING OUT THE INVENTION

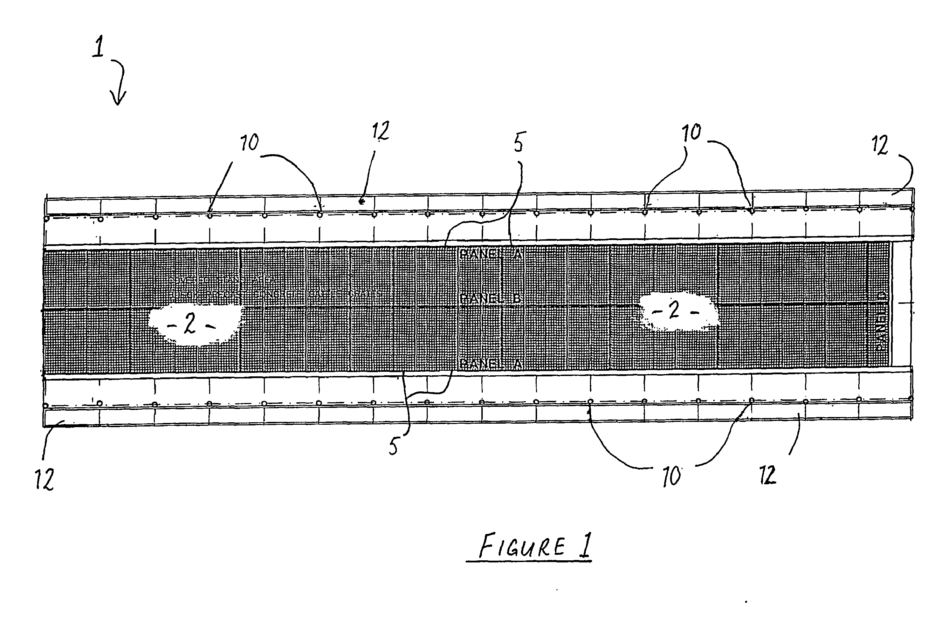

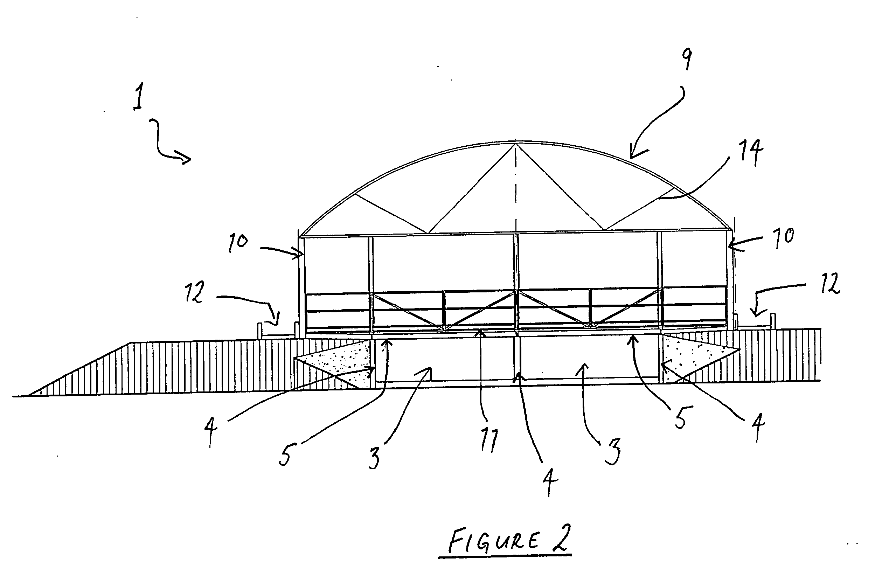

With reference to the drawings and in particular Figures 1 and 2, there is shown an example of a stand-off pad 1 according to the present invention suitable for dairy farming. The pad 1 includes a floor 2, a basement area 3 below the floor 2 for collecting waste, and support means 4 for supporting floor 2 above basement area 3, the support means forming walls.

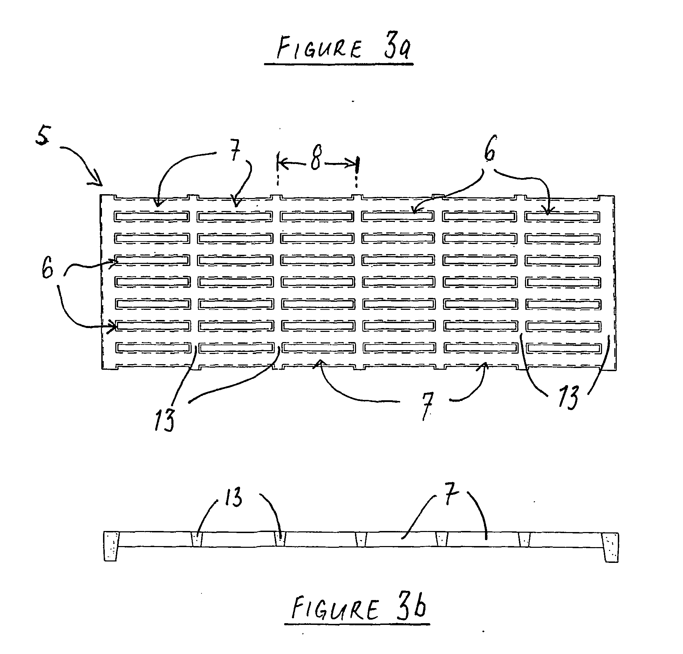

Floor 2 is comprised of a number of modular flooring components in the form of substantially rectangular shaped pre-stressed concrete slabs 5 (shown in more detail in Figures 3(a) and 3(b)). The slabs 5 are approximately 3500mm long and 1200mm wide. Each slab 5 is provided with a plurality of apertures 6 effectively dividing the slab into a number of slats 7 which extend the full length of the slab. Each slat 7 is joined by supporting cross-members 13 extending across the entire width of the slab, separated by approximately 485mm (indicated by arrow 8) while the width of each aperture 6 is approximately 45mm.

Apertures or slots 6 provide the floor 2 (formed by the slabs 5) with drainage means. The drainage means, in the form of the apertures 6, allow for most if not all of the waste material, such as faeces, urine, feed, and the like, to pass therethrough and into the basement area 3.

In the example shown in Figure 1, floor 2 is comprised of 98 slabs arranged in two rows of 49 slabs.

With reference now in particular to Figure 2, there is shown a cover 9 for pad 1. Cover 9 is supported by a number of posts or poles or walls 10 and is comprised of a plastics film stretched across a roof support structure 14.

The four sides of the stand-off pad 1 are each provided with containment means or a fence-type structure including gates 11 at both ends. In the example shown none of the four sides of pad 1 are provided with side walls thereby improving ventilation.

The basements area 3 may be provided with a bedding mix, including wood chips and/or top soil and/or straw/hay and/or bark.

Slabs 5 rest upon vertically stabilised concrete support walls 4, and are preferably not fixed thereto by any other means.

When it is time to clean the stand-off pad (which only needs cleaning every 1 to 5 years) a tractor or other farm vehicle fitted with appropriate lifting means or forks may easily and readily remove the slabs 5 by accessing them from either end of the pad 1. Moreover, the width of each basement area 3 (being essentially the length of each slab 5) provides sufficient width for access to the basement area by common or usual farm vehicles such as tractors, bobcats, or quads. Hence the scraping out or cleaning of each basement area 3 is a relatively quick and easy task. Removable ramps may be provided at one or both ends of the stand-off pad for livestock entry and exit to the pad. Removal of the ramp(s) then allows access to the basement and modular flooring components by farm vehicles. Alternatively, livestock access could be provided at one end which is at ground level while at the other end the floor of basement area 3 is also substantially at ground level while the stand-off pad and floor of the basement area are substantially flat and level (that is, horizontal). Alternatively, one or more ramps may be provided within the basement area, preferably at one end, which are exposed by the removal of one or more modular flooring components. Once the ramps are exposed, farm vehicles may be able to enter and exit the basement area via the ramps.

Pad 1 is provided with feed stalls 12 located along each side of the pad 1. The fence along each side (not shown) is at a height which allows for the cattle to access the feed stalls 12, whilst still retaining the cattle within the pad 1. Alternatively, the feed stalls could be provided within the side fences. Furthermore, the pad 1 is provided with several water troughs (not shown) housed under the cover 9.

The following list represents some of the advantages associated with the present invention. It is to be appreciated however that the following list is not intended to be exhaustive, and nor may all of the advantages be present in any one embodiment. The following list of advantages is therefore given by way of example only:
1. Use of pre-stressed concrete components or slabs minimises or does away with the effect of many diseases or afflictions which may otherwise affect cattle or stock, for example mastitis, lameness and foot rot.
2. The use of pre-stressed concrete has been found to be a more appropriate and better surface for livestock. This in turn improves the mating rate of cattle or stock, and also provides a better and safer surface for calving.
3. The use of a stand-off pad keeps pastures fresher, particularly during wet seasons or wet periods, and hence the problem of pugging and compaction damage to pasture is minimised or greatly reduced.
4. The stand-off pad is relatively maintenance free and therefore cost and time effective to maintain.
5. The basement area may be accessed by standard farm equipment or vehicles such as tractors, bobcats, and the like. This has significant advantages in relation to maintenance and cleaning and/or removing/replacing the slabs.
6. Because all waste material is collected in the basement area, there is no effluent runoff into effluent disposal systems such as oxidation ponds, which therefore greatly reduces the strain upon same. Furthermore, there is no runoff of effluent into waterways and the like, thus minimising pollution to the environment.
7. Further to advantage 6 above, as a result of a reduction in nitrogen containing compounds entering waterways (due to it being collected in the basement area) a farmer may therefore be free or able to spread more nitrogen containing fertilisers on pasture, resulting in greater pasture growth and hence greater productivity.
8. Further to advantage 6 above, as a result of a reduction in phosphorous containing compounds entering waterways (due to it being collected in the basement area) a farmer may therefore be free or able to spread more phosphorous containing fertilisers on pasture, resulting in greater pasture growth and hence greater productivity.
9. It has been found that, particularly with the use of bedding mixes and the like, the waste matter collected forms a type of fertiliser or other nutrient-rich product(s) which may then be utilised as required or as desired, for example by spreading on pasture or selling.
10. It has been found that that the use of bedding mixes in the basement area, such at those bedding mixes described previously, have the effect of greatly reducing the smell or unpleasant odours ordinarily associated with cattle waste products such as faeces and urine. This has the effect of minimising insect activity in the area such as flies or blowflies.
11. Use of water is minimised as the cleaning or maintenance of the basement area does not require flushing.

Aspects of the present invention have been described by way of example only and it should be appreciated that modifications and additions may be made thereto without departing from the scope thereof, as defined by the following claims.

## Claims

1. A stand-off pad (1) for supporting waste matter producing animals comprising:
a floor (2), including drainage means allowing some of said waste matter to pass therethrough,
a basement area (3) below said floor (2) for collecting said waste matter passing through said drainage means,
support means (4) for supporting said floor (2) above said basement area (3), and a waterproof cover (9) supported above at least part of said floor (2), **characterised in that** said cover (9) allowing at least some light to pass therethrough,
and wherein said drainage means is adapted to retain a portion of said waste matter thereon and light passing through said cover (9) aids in drying said portion to form a layer of dry waste material on said floor (2).

2. A stand-off pad (1) as claimed in claim 1, wherein cover support means (4) are provided to support the cover (9) above said floor (2) and wherein the cover support means (9) includes ventilation openings.

3. A stand-off pad (1) as claimed in any one of the preceding claims, wherein said floor (2) comprises pre-stressed concrete.

4. A stand-off pad (1) as claimed in any one of the preceding claims, wherein said drainage means is in the form of a plurality of apertures or slots (6) formed in the floor (2).

5. A stand-off pad (1) as claimed in any one of the preceding claims, wherein said floor (2) is in the form of a plurality of modular floor components.

6. A stand-off pad (1) as claimed in claim 5, wherein said modular floor components are provided with a plurality of spaced apart slats (7) with the spaces between slats (7) providing said drainage means.

7. A stand-off pad (1) as claimed in claim 6, wherein the width of gaps between slats (7) is between about 2cm to about 10cm and the width of the slats (7) is between about 10cm to about 30cm.

8. A stand-off pad (1) as claimed in any one of claims 5 to 7, wherein the length of each modular floor component is between about 2m to about 5m and the width of each modular floor component is between about 0.5m to about 2m.

9. A stand-off pad (1) as claimed in any one of the preceding claims, wherein containment means are provided to contain said waste producing animals on said stand-off pad (1).

10. A stand-off pad (1) as claimed in any one of the preceding claims, wherein said cover (9) is in the form of a roof supported by side walls or posts/poles (10).

11. A stand-off pad (1) as claimed in claim 10, wherein the roof is comprised primarily, or in whole, of plastics film and/or reinforced fabric.

12. A stand-off pad (1) as claimed in any one of the preceding claims, wherein said basement area (3) is provided with a bedding mix.

13. A stand-off pad (1) as claimed in claim 12, wherein said bedding mix includes wood chips and/or topsoil and/or straw/hay and/or bark and/or sand.

14. A stand-off pad (1) as claimed in any one of the preceding claims, wherein said floor (2) is not fixed to the support means (4).

15. A stand-off pad (1) as claimed in any one of the preceding claims, wherein said basement area (3) is accessible by standard farm vehicles, once said floor (2) has been removed.

16. A stand-off pad (1) as claimed in any one of the preceding claims, further comprising at least one feed stall (12) and/or at least one drinking water trough.

## Patentansprüche

1. Abstandsblock (1) zum Tragen von Abfallstoffe erzeugenden Tieren, der Folgendes umfasst:
einen Boden (2), der ein Ablassmittel enthält, das einen Anteil der Abfallstoffe durchlässt,
einen Kellerbereich (3) unter dem Boden (2) zum Sammeln der das Ablassmittel durchquerenden Abfallstoffe,
Abstützmittel (4) zum Abstürzen des Bodens (2) über dem Kellerbereich (3), und eine wasserfeste Abdeckung (9), die über wenigstens einem Teil des Bodens (2) abgestützt wird, **dadurch gekennzeichnet, dass** die Abdeckung (9) wenigstens etwas Licht durchlässt,
und wobei das Ablassmittel angepasst ist, um einen Anteil der Abfallstoffe darauf zu halten, und die Abdeckung (9) durchdringendes Licht beim Trocknen des Anteils hilft, um eine Schicht aus trockenen Abfallstoffen auf dem Boden (2) zu bilden.

2. Abstandsblock (1) nach Anspruch 1, bei dem Abdeckungsabstützmittel (4) vorgesehen sind, um die Abdeckung (9) über dem Boden (2) abzustützen, und die Abdeckungsabstützmittel (9) Lüftungsöffnungen enthalten.

3. Abstandsblock (1) nach einem der vorhergehenden Ansprüche, bei dem der Boden (2) Spannbeton aufweist.

4. Abstandsblock (1) nach einem der vorhergehenden Ansprüche, bei dem das Ablassmittel in Form einer Mehrzahl von in dem Boden (2) ausgebildeten Öffnungen oder Schlitzen (6) vorliegt.

5. Abstandsblock (1) nach einem der vorhergehenden Ansprüche, bei dem der Boden (2) in Form einer Mehrzahl modularer Bodenkomponenten vorliegt.

6. Abstandsblock (1) nach Anspruch 5, bei dem die modularen Bodenkomponenten mit einer Mehrzahl voneinander beabstandeter Latten (7) versehen sind, wobei die Zwischenräume zwischen Latten (7) das Ablassmittel bereitstellen.

7. Abstandsblock (1) nach Anspruch 6, bei dem die Breite der Zwischenräume zwischen Latten (7) zwischen etwa 2 cm bis etwa 10 cm beträgt, und die Breite der Latten (7) zwischen etwa 10 cm bis etwa 30 cm beträgt.

8. Abstandsblock (1) nach einem der Ansprüche 5 bis 7, bei dem die Länge jeder modularen Bodenkomponente zwischen etwa 2 m bis etwa 5 m beträgt und die Breite jeder modularen Bodenkomponente zwischen etwa 0,5 m bis etwa 2 m beträgt.

9. Abstandsblock (1) nach einem der vorhergehenden Ansprüche, bei dem Einzäunungsmittel vorgesehen sind, um die Abfall erzeugenden Tiere auf dem Abstandblock (1) zu halten.

10. Abstandsblock (1) nach einem der vorhergehenden Ansprüche, bei dem die Abdeckung (9) in Form eines Dachs vorliegt, das durch Seitenwände oder Pfosten/Ständer (10) abgestützt wird.

11. Abstandsblock (1) nach Anspruch 10, bei dem das Dach primär, oder vollständig, aus Kunststofffolie und/oder verstärktem Gewebe besteht.

12. Abstandsblock (1) nach einem der vorhergehenden Ansprüche, wobei der Kellerbereich (3) mit einer Streumischung versehen ist.

13. Abstandsblock (1) nach Anspruch 12, bei dem die Streumischung Holzchips und/oder Humus und/oder Stroh/Heu und/oder Baumrinde und/oder Sand enthält.

14. Abstandsblock (1) nach einem der vorhergehenden Ansprüche, bei dem der Boden (2) nicht an den Abstützmitteln (4) befestigt ist.

15. Abstandblock (1) nach einem der vorhergehenden Ansprüche, bei dem der Kellerbereich (3) nach Entfernung des Bodens (2) für Standardfarmfahrzeuge zugänglich ist.

16. Abstandsblock (1) nach einem der vorhergehenden Ansprüche, der weiter mindestens einen Futterstand (12) und/oder mindestens einen Trinkwassertrog aufweist.

## Revendications

1. Plateforme de séparation (1) destinée à supporter des animaux produisant des déchets comportant :
un plancher (2), comprenant un moyen de drainage permettant à une partie desdits déchets de traverser celui-ci,
une zone de soubassement (3) sous ledit plancher (2) destinée à collecter lesdits déchets traversant ledit moyen de drainage,
des moyens de support (4) destinés à supporter ledit plancher (2) au-dessus de ladite zone de soubassement (3) et une couverture étanche (9) supportée au-dessus d'au moins une partie dudit plancher (2),
**caractérisée en ce que** ladite couverture (9) permet à au moins une certaine quantité de lumière de traverser celle-ci,
et dans laquelle ledit moyen de drainage est adapté pour retenir une partie desdits déchets sur celui-ci et la lumière traversant ladite couverture (9) facilite le séchage de ladite partie pour former une couche de déchets secs sur ledit plancher (2).

2. Plateforme de séparation (1) selon la revendication 1, dans laquelle des moyens de support (4) de la couverture sont mis en oeuvre pour supporter la couverture (9) au-dessus dudit plancher (2) et dans laquelle le moyen de support (9) de la couverture comprend des ouvertures de ventilation.

3. Plateforme de séparation (1) selon l'une quelconque des revendications précédentes, dans laquelle ledit plancher (2) comporte du béton précontraint.

4. Plateforme de séparation (1) selon l'une quelconque des revendications précédentes, dans laquelle ledit moyen de drainage est sous la forme d'une pluralité d'orifices ou de fentes (6) formés dans le plancher (2).

5. Plateforme de séparation (1) selon l'une quelconque des revendications précédentes, dans laquelle ledit plancher (2) est sous la forme d'une pluralité de composants modulaires de plancher.

6. Plateforme de séparation (1) selon la revendication 5, dans laquelle lesdits composants modulaires de plancher sont mis en oeuvre avec une pluralité de lattes espacées (7), les espaces entre les lattes (7) mettant en oeuvre ledit moyen de drainage.

7. Plateforme de séparation (1) selon la revendication 6, dans laquelle la largeur des interstices entre les lattes (7) est entre environ 2 cm à environ 10 cm et la largeur des lattes (7) est entre environ 10 cm à environ 30 cm.

8. Plateforme de séparation (1) selon l'une quelconque des revendications 5 à 7, dans laquelle la longueur de chaque composant modulaire de plancher est entre environ 2 m à environ 5 m et la largeur de chaque composant modulaire de plancher est entre environ 0,5 m à environ 2 m.

9. Plateforme de séparation (1) selon l'une quelconque des revendications précédentes, dans laquelle des moyens de confinement sont mis en oeuvre pour confiner lesdits animaux produisant des déchets sur ladite plateforme de séparation (1).

10. Plateforme de séparation (1) selon l'une quelconque des revendications précédentes, dans laquelle ladite couverture (9) est sous la forme d'un toit supporté par des parois latérales ou des poteaux/perches (10).

11. Plateforme de séparation (1) selon la revendication 10, dans laquelle le toit est constitué principalement, ou en intégralité, de film plastique et/ou de tissu armé.

12. Plateforme de séparation (1) selon l'une quelconque des revendications précédentes, dans laquelle ladite zone de soubassement (3) est mise en oeuvre avec un mélange de litière.

13. Plateforme de séparation (1) selon la revendication 12, dans laquelle ledit mélange de litière comprend des copeaux de bois et/ou de la terre végétale et/ou de la paille/du foin et/ou des écorces et/ou du sable.

14. Plateforme de séparation (1) selon l'une quelconque des revendications précédentes, dans laquelle ledit plancher (2) n'est pas fixé aux moyens de support (4).

15. Plateforme de séparation (1) selon l'une quelconque des revendications précédentes, dans laquelle ladite zone de soubassement (3) est accessible aux véhicules agricoles standard, une fois que ledit plancher (2) a été retiré.

16. Plateforme de séparation (1) selon l'une quelconque des revendications précédentes, comportant par ailleurs au moins une stalle d'alimentation (12) et/ou au moins un abreuvoir d'eau potable.
